(19) Europäisches Patentamt
European Patent Office
Office européen des brevets

(11) **EP 1 408 052 B1**

(12) **EUROPEAN PATENT SPECIFICATION**

(45) Date of publication and mention
of the grant of the patent:
**06.08.2008 Bulletin 2008/32**

(51) Int Cl.:
***C08F 2/12*** *(2006.01)*     ***G03C 1/49*** *(2006.01)*
***C08F 220/18*** *(2006.01)*

(21) Application number: **03021538.8**

(22) Date of filing: **24.09.2003**

(54) **Synthesis of a copolymer containing hydrophilic functionality**

Synthese eines Copolymers mit hydrophiler Funktionalität

Synthèse d'un polymère presentant un groupe hydrophile

(84) Designated Contracting States:
**DE FR GB IT**

(30) Priority: **11.10.2002 IT SV20020051**

(43) Date of publication of application:
**14.04.2004 Bulletin 2004/16**

(73) Proprietor: **Ferrania Technologies S.p.A.**
**17014 Cairo Montenotte, SV (IT)**

(72) Inventor: **Franceschini, Paola**
**17014 Ferrania (Savona) (IT)**

(74) Representative: **Bottero, Claudio et al**
**Porta, Checcacci & Associati S.p.A.**
**Via Trebbia, 20**
**20135 Milano (IT)**

(56) References cited:
WO-A-96/20962     US-A- 4 076 677
US-A- 4 197 127     US-A- 5 231 145

• KUN CAO, BO-GENG LI, ZU-REN PAN: "Micron-size functional uniform PMMA particles by dispersion copolymerization in polar media" MACROMOL. SYMP., vol. 150, 2000, pages 195-200, XP002266061
• B. KRIWET, E. WALTER, T. KISSEL: "Synthesis of bioadhesive poly(acrylic acid) nano- and microparticles using an inverse emulsion polymerization method for the entrapment of hydrophilic drug candidates" JOURNAL OF CONTROLLED RELEASE, vol. 56, 1998, pages 149-158, XP002266062

**EP 1 408 052 B1**

## Description

## FIELD OF THE INVENTION

The present invention relates to a process of synthesizing a particulate copolymer containing hydrophilic functionality. More particularly, the present invention relates to a process of synthesizing a particulate copolymer by reacting in a reaction medium a) a water insoluble ethylenically unsaturated monomer with b) an ethylenically unsaturated monomer containing hydrophilic functionality in the presence of a polymerization stabilizer.

## BACKGROUND OF THE ART

Particulate copolymers, i.e., copolymers in the form of discrete particles having diameters in the size range of microns, containing a significant amount of a hydrophilic monomer are well known in the art. In fact, for example, the alkali soluble matting agents used in the protective layers of a photographic material are composed of particulate copolymers which are insoluble in neutral or acidic solutions and soluble in alkaline media so that they are removable during photographic processing. The particulate copolymers generally comprise a water insoluble ethylenically unsaturated monomer and an ethylenically unsaturated monomer containing hydrophilic functionality, usually a carboxylic acid functionality, in such an amount as to guarantee particle solubility in alkali media (usually more than 20% by weight copolymer/alkali medium). Alkali-soluble matting agents consisting of methacrylic acid-methylmethacrylate copolymers have been described, for example, in US Patent Nos. 2,391,181; 2,992,101; 3,767,448 and 4,142,894. However, it is difficult to synthesize these polymeric materials by using methods known in the art.

Such matting agents are incorporated in the photographic layers in the form of discrete particles and they are prepared, for example, by a two-steps process, as disclosed in EP Patent application No. 370,405. This two-steps process requires a first step consisting of the preliminary synthesis of the copolymer by solution polymerization and its isolation from the reaction medium, and a second step consisting of the preparation of the dispersion of the copolymer in the form of discrete particles in the appropriate solvent(s). Such a two-steps process is difficult to reproduce and generally the size distribution curves of the obtained discrete particles are affected by great variability depending on many factors, such as molecular weight of the polymer used, amount of organic solvent employed, efficiency of dispersion, variation between reaction conditions, etc. In addition, said discrete particles are very broad, having a high deviation coefficient.

Suspension polymerization is an alternative way to synthesize particulate polymer in one-step process. This kind of polymerization is commonly conducted in an aqueous suspending media by suspending discrete droplets of monomer in the aqueous phase, initiating a free radical polymerization and continuing the polymerization until the suspended droplets have formed solid, spherical particles. In this process, polyaddition polymerizable monomers are added to an aqueous medium containing a particulate or polymeric suspending agent to form a discontinuous phase (oil droplet) in a continuous phase (water). The obtained mixture is subjected to shearing forces, such as by agitation, homogenization and the like to reduce droplets size. After shearing is stopped and equilibrium with respect to the droplet size is reached (due to the stabilizing action of the particulate suspending agent which covers the droplets surface), the polymerization is completed and an aqueous suspension of polymer particles is formed.

When suspension polymerization is attempted with a monomer or comonomer which is partially or fully water-soluble, monomer tends to partition in the aqueous phase. In case of fully water-soluble monomers, the suspended droplets hardly ever form or, in case formation does happens, several undesired phenomena occur during polymerization such as, for example, precipitation of polymers in the aqueous phase (caused by dissolved monomer forming insoluble polymer which precipitates from solution), or formation of particle agglomerates (caused by the presence of soluble polymers in the aqueous phase).

EP Patent application No. 831,366 discloses that polymer particles can be easily made by suspension polymerization from monomers mixtures including greater than 20% of ethylenically unsaturated monomers containing carboxylic acid groups, when the aqueous phase contains a water-insoluble particulate stabilizer having a size less than 100 nm in an effective amount of water-soluble inorganic salt to allow formation of stable monomer droplets. Unfortunately, the dispersion of particulate copolymer obtained by this way contains a great amount of a water-soluble inorganic salt, which must be eliminated before adding the dispersion into the coating composition of the photographic layer. In fact, the introduction of a great quantity of salts into a photographic layer may cause serious problems of tackiness of the layer itself, so it is necessary to add a purification or salt elimination step to the entire process which loses the advantage of being a "one-step" process. Moreover, the use of suspension polymerization, even if the process is well controlled, has some disadvantages, such as, for example, insoluble polymer precipitation from solution or agglomerates generation. When the particulate copolymer is used as a photographic matting agent, said disadvantages contribute to plugging of filters used in coating operations and causing defects in the final photographic product such as visible spots, coating streaks and the like.

Dispersion polymerization is a theoretically attractive way to prepare micron-size polymer particles in a one-step process. It is defined as the polymerization of a monomer or comonomers soluble in the reaction medium (usually an organic liquid) to produce a polymer, insoluble in the reaction medium, that precipitates in form of discrete beads. The stability of the polymeric beads against coalescence and agglomeration can be guaranteed by the adsorption of a polymeric stabilizer present in the organic medium on the polymer particles surface. The process can be seen as a particular kind of precipitation polymerization in which flocculation is prevented and the particle size is readily controlled. At the beginning of the process, monomer, comonomers, stabilizer and initiator are in homogeneous solution in the organic medium. Initially, polymer molecules aggregate in small groups with stabilizer molecules to form stabilized particles nuclei, less than 0.1 $\mu$m in diameter and probably less than 0.01 $\mu$m in diameter. This stage is completed very rapidly (well under 1% conversion), and then the polymer precipitates in form of spherical particles. Once the particles have been formed, they adsorb monomer from the organic phase. From this stage on, any radicals initiated in the diluent phase are swept up by particles before they have had time to grow more than a few monomer units. This results in an enormous decrease in the effective radical concentration in the diluent phase, suppressing both solution polymerization and formation of new particles.

The dispersion polymerization process is usually applied in the art to synthesize polymers in form of beads, composed of water-insoluble ethylenically unsaturated monomers in suitable media.

Since the 1980's, most work in the field of dispersion polymerization has focused on monodispersity of the polymer particles by dispersion homopolymerization using a homopolymer as a dispersant. Only a few articles have dealt with the synthesis of uniform copolymer particles by using a monomer and a macromonomer, this latter being used as both comonomer and dispersant, such as, for example, K.Ishizu et al., Makromol.Rapid Commun.., 18, 1997, pp. 639, which discloses the pH effect on microsphere formation in the dispersion copolymerization of methylmethacrylate with vinylbenzyl-terminated poly(acrylic acid) macromonomers. By varying the pH conditions, it is possible to obtain microspheres characterized by a size distribution curve of from 0.18 to 0.38 $\mu$m with an average content of PAA (polyacrylic acid) macromonomer of 5% based on total monomers. This two-step process (synthesis of the macromonomer followed by a reaction of the macromonomer with the water insoluble ethylenically unsaturated monomer) leads to polymer particles with a low content of the monomer containing hydrophilic functionality.

Very few technical documents have been published on unseeded dispersion copolymerization, such as, for example, Kun Cao et al., Macromol. Symp. 150, 2000, pp. 195-200 which describes the synthesis of monodisperse copolymer particles in the range of 1-5 $\mu$m by unseeded batch dispersion copolymerization of methylmethacrylate as major monomer with an acrylic acid comonomer having different functional group. The viscosity of the mixture in the reaction medium is lower than 5 cps (measured at 40°C with a Brookfield viscometer). The addition of hydrophilic comonomer causes poor stability and decreases flexibility of polymerization conditions. Moreover, the partitioning of functional group chemically anchored on the surface of the copolymer particles is poorly controlled. This may be a fatal weakness for application of an unseeded batch dispersion process to obtain a copolymer including an effective amount of an ethylenically unsaturated monomer containing hydrophilic functional group.

In any case, dispersion polymerization has never been referred as applicable to copolymer containing an effective amount of ethylenically unsaturated comonomer containing hydrophilic functionality. This is probably due to the complex nature of the partitioning of the comonomer as it has different solubility between monomer-swollen particles phase and continuous phase.

## SUMMARY OF THE INVENTION

The present invention relates to a process for synthesizing a particulate copolymer comprising: providing a reaction mixture comprising a reaction medium, a polymerization stabilizer, a water-insoluble ethylenically unsaturated monomer and an ethylenically unsaturated monomer containing hydrophilic functionality, and polymerizing the water-insoluble ethylenically unsaturated monomer and the ethylenically unsaturated monomer containing hydrophilic functionality, wherein said reaction mixture has a viscosity value of at least 10 cps measured at 40°C.

The polymerization reaction is preferably conducted at a temperature lower than 100°C and activated by a polymerization catalyst. The resulting particulate copolymer dispersion comprises copolymer particles showing a weight average diameter size in the range of microns and in the absence of significant defects, such as coagulation or agglomerates.

The present invention also provides a dispersion of a particulate copolymer obtained by using the process described above and a photographic material comprising a support and at least one layer containing a particulate copolymer obtained by using the process described above. The photographic material presents improved physical and optical performance.

## DETAILED DESCRIPTION OF THE INVENTION

The present invention relates to a process for synthesizing a particulate copolymer comprising: providing a reaction mixture comprising a reaction medium, a polymerization stabilizer, a water-insoluble ethylenically unsaturated monomer and an ethylenically unsaturated monomer containing hydrophilic functionality, and polymerizing the water-insoluble ethylenically unsaturated monomer and the ethylenically unsaturated monomer containing hydrophilic functionality, wherein said reaction mixture has a viscosity value of at least 10 cps measured at 40°C, for example by a Brookfield viscometer.

A non-limiting example of a suitable reaction media used in the present invention includes a mixture of water and aliphatic alcohols having from 1 to 5 carbon atoms, such as, for example, methanol, ethanol, propanol, isopropanol, butanol and pentanol. The choice of the most suitable reaction media depends on the solubility properties of the monomers used for the particulate copolymer preparation. Preferred suitable reaction media are water/alcohol mixtures in a weight ratio preferably of from 1:1 to 3:1, more preferably of from 1:1 to 2:1, water to alcohol. Non-limiting examples of suitable alcohols are all those soluble in water in a weight ratio of from 1:1 to 3:1.

Non-limiting examples of polymerization stabilizers used in the present invention include any of those known in the art, such as, for example, homopolymers or copolymers of monomers containing nitrogen atoms or heterocyclic rings having a number average molecular weight of at least 10,000. Specific examples of monomers are, for example, vinylpyridine, vinylpyrrolidone, N-vinylimidazole, and ethyleneimine. Additional useful polymerization stabilizers are, for example, polyvinylalcohol, acid-processed gelatin or alkali-processed gelatin. In particular, it has been found that acid-processed or alkali-processed gelatin can be efficiently used as a polymerization stabilizer in the process described in the present invention.

Non-limiting examples of some suitable water-insoluble ethylenically unsaturated monomers which can be used in the present invention as component of the copolymer are monomers having a solubility that is lower than 10g per 100 ml, preferably lower than 6g per 100ml of water. Suitable water-insoluble ethylenically unsaturated monomers are, for example, acrylic or methacrylic acid esters, such as, for example, methylacrylate, ethylacrylate, n-propylacrylate, isopropylacrylate, n-butylacrylate, isobutylacrylate, sec-butylacrylate, amylacrylate, hexylacrylate, octylacrylate, 2-phenoxyethylacrylate, 2-chloroethylacrylate, 2-acetoxyethylacrylate, benzylacrylate, cyclohexylacrylate, phenylacrylate, 2-methoxyethylacrylate, methylmethacrylate, ethylmethacrylate, n- propylmethacrylate, isopropylmethacrylate, n-butylmethacrylate, sec-butylmethacrylate, tert-butylmethacrylate, amylmethacrylate, hexylmethacrylate, cyclohexylmethacrylate, benzylmethacrylate, octylmethacrylate, phenylmethacrylate, naphthylmethacrylate, cresylmethacrylate, 2-methoxyethylmethacrylate, 2-butoxyethylmethacrylate, laurylmethacrylate, 2-ethylhexylmethacrylate, nonylacrylate, isobornyl acrylate, isobornylmethacrylate and the like. Preferred water-insoluble ethylenically unsaturated monomers used in the present invention are methylacrylate, methylmethacrylate, ethylacrylate, ethylmethacrylate, butylmethacrylate or butylacrylate.

Suitable ethylenically unsaturated monomers containing hydrophilic functionality which can be used in the present invention as component of the copolymer are monomers having a solubility that is higher than 10g per 100ml of water. Suitable ethylenically unsaturated monomers containing hydrophilic functionality are, for example, acrylic acid, methacrylic acid, ethacrylic acid, hydroxyethyl methacrylate, hydroxyethyl acrylate, 4-hydroxybutylmethacrylate, itaconic acid, maleic acid, fumaric acid; monoalkyl itaconate, such as, for example, monomethyl itaconate, monoethyl itaconate or monobutyl itaconate; monoalkyl maleate, such as, for example, monomethylmaleate or monobuthylmaleate; citraconic acid; styrenecarboxylic acid, aminomethylstyrene and styrene sulfonic acid; methacryloxyethyltrimethyl ammonium chloride, acryloxyethyltrimethyl ammonium chloride, methacryloxyethyldimethylbenzyl ammonium chloride, dimethylaminoethylmethacrylate, dimethylaminoethylethacrylate and the like. Preferred ethylenically unsaturated monomer containing hydrophilic functionality used in the present invention are acrylic acid, methacrylic acid, ethylacrylic acid, hydroxyethyl methacrylate, hydroxyethyl acrylate, dimethylaminoethylmethacrylate or dimethylaminoethylethacrylate.

The reaction mixture useful in the process of the present invention, comprising the above described reaction medium, polymerization stabilizer, water-insoluble ethylenically unsaturated monomer and ethylenically unsaturated monomer containing hydrophilic functionality, has a viscosity value of at least 10 cps, preferably of at least 25 cps., measured at 40 °C by a Brookfield viscometer.

Generally the reactant concentrations are chosen in accordance with the average particle size desired. As a general rule, a higher concentration of monomer causes the production of a broader range of particles. A man skilled in the art can properly choose the right balance of these reaction components to obtain the range of particle size and particle size distribution desired. Either or both of the water-insoluble ethylenically unsaturated monomer or the ethylenically unsaturated monomer containing hydrophilic functionality are added in a proper concentration with respect to the total mixture content, usually at a concentration lower than 30% by weight, preferably lower than 15% by weight, most preferably in the range between 1% and 10% by weight, with respect to the total mixture content.

The polymerization reaction is preferably activated by the addition of a polymerization catalyst, and is preferably conducted at a temperature lower than 100°C for the period of time needed for the completion of the polymerization.

Suitable polymerization catalysts are, for example, selected within the group of the free radical type polymerization catalysts, such as, by way of non-limiting example, benzoyl peroxide, lauryl peroxide, triazines, s-triazines, catalyst complexes of metals or cumene hydroperoxide, or of the azoic type, such as, for example, 2,2'-azobisisobutyronitrile or 2,2'-azobis(2,4-dimethylvaleronitrile).

The reaction temperature is preferably maintained between 50°C and 100°C, more preferably between 60°C and 90°C. Most preferably, the mixture is maintained at the reflux temperature of the reaction mixture. Agitation of the reaction mixture can also affect particle size and particle distribution, with greater shearing tending to decrease the particle size.

The reaction time is preferably in the range of from 1 to 10 hours, more preferably from 2 to 5 hours.

At the end of the polymerization reaction, a dispersion of the particulate copolymer in the reaction mixture is obtained. The resulting particulate copolymer dispersion comprises copolymer particles showing an average diameter size in the range of microns and absence of defects, such as coagulation or agglomerates. The dimensions of the particulate copolymers obtained with the process of the present invention can be measured, for example, by a method based on laser diffraction using a Malvern MASTERSIZER™ X SB.20 apparatus. The weight average diameter of the copolymer particles is in the range of from 0.5 to 8 $\mu$m, preferably from 1 to 6 $\mu$m, and the deviation coefficient is less than 1.5, preferably less than 1.2.

In a preferred embodiment, the process of the present invention is carried out by (a) dispersing a polymerization stabilizer in a reaction medium, (b) heating the reaction mixture to a temperature within the range of from 60° to 90°C, (c) adding to the reaction mixture a water-insoluble ethylenically unsaturated monomer and a ethylenically unsaturated monomer containing hydrophilic functionality, (d) adding to the reaction mixture a polymerization catalyst, and (e) maintaining the reaction mixture at reflux temperature until substantial completion of polymerization.

The particulate copolymer dispersion obtained with the process of the present invention can be used for a number of applications, such as, for example, in encapsulating bioactive agents, such as antigens, drugs and DNA for vaccination and gene therapy, in encapsulating coloring agents, such as dyes and/or pigments, for protecting and marking products, as described, for example, in US Patents 6,455,157 and 6,432,715, for dewatering of sludge, as described, for example, in US Patents 6,413,433 and 6,083,404, in encapsulating gases for preparing contrast agent compositions in ultrasound and radiographic imaging as described, for example, in US Patent 6,054,118. The above described auxiliary agents are encapsulated in the particulate copolymer by adding the auxiliary agents in the above described reaction mixture before the start of the polymerization reaction. A preferred application thereof relates to the use of the particles as soluble matting agents in photographic elements. The matting agents are generally incorporated into the outer layer or adjacent-to-the-outer layer of the photographic material. They can be for instance incorporated into the surface protective layer coated on the silver halide emulsion layers, or into the backing layer coated on the support base on the side opposite to that containing the light-sensitive layers, or on both sides. It is more preferred, in any case, to incorporate the matting agents into outer protective layer.

The particulate copolymer dispersion obtained with the process of the present invention can be directly dispersed in the coating composition of photographic layer without the need of further treatments, such as purification, filtration, separation and redispersion of the copolymer, and the like, as previously reported in the processes of the prior art. Preferably, the particulate copolymer is incorporated in the photographic layer at a coverage of from 50 to 600 mg/m$^2$, more preferably from 150 to 400 mg/m$^2$.

Photographic materials comprising the particulate copolymer obtained with the process of the present invention generally comprise at least one light-sensitive layer, such as a silver halide emulsion layer, coated on at least one side of a support. This layer can be sensitized to a particular range of wavelengths with a sensitizing dye. Additional light sensitive layers can be sensitized to a different wavelength range. The light sensitive layers can contain or have associated therewith dye-forming compounds or couplers. For example, a red-sensitive emulsion would generally have a cyan coupler associated therewith, a green- sensitive emulsion would generally have a magenta coupler associated therewith, and a blue-sensitive emulsion would generally have a yellow coupler associated therewith. Other layers and additives, such as antistatic compositions, subbing layers, surfactants, filter dyes, intermediate layers, protective layers, anti-halation layers, barrier layers, development inhibiting compounds can be present in the photographic element.

Specific photographic materials comprising the particulate copolymer obtained with the process of the present invention are light-sensitive photographic color materials such as color negative films, color reversal films, color papers, as well as black-and-white light-sensitive photographic materials such as X-ray light-sensitive materials, lithographic light-sensitive materials, black-and-white photographic printing papers, black-and-white negative films. A detailed description of photographic elements and of various layers and additives can be found in Research Disclosure 17643 December 1978, 18431 August 1979, 18716 November 1979, 22534 January 1983, and 308119 December 1989.

The use of the particulate copolymer obtained with the process of the present invention as soluble matting agent allows to obtain, after processing and removing of the particles, a negative film with an homogeneous surface and with improved optical and physical properties.

The present invention will now be further illustrated by reference to the following non-limiting examples.

**EXAMPLES.**

Example 1

Sample 1 (Invention). 396 ml of deionized water, 198 g of ethyl alcohol and 28g of PVP™K90 (a polyvinyl pyrrolidinone available from I.S.P. Technologies in Wayne, N.J.) have been charged into a 1 liter capacity glass reactor (a baffle-equipped separable flat bottom flask, equipped with a stirrer, a thermometer and a condenser). The mixture has been stirred for 20 minutes at the temperature of reflux of 81°C. 19 g of ethylmethacrylate and 15 g of methacrylic acid have been then added (the ethylmethacrylate/methacrylic acid weight ratio was 56:44) to allow the mixture to reach a viscosity of 38 cps, measured by a Brookfield viscometer at 40°C. Finally, 1.6 g of 2,2'azobisisobutyrronitrile have been added and the obtained solution has been reflux heated for five hours. The weight average diameter and the deviation coefficient of the particulate copolymer particles have been measured with a method based on laser diffraction using a Malvern MASTERSIZER™ X SB.20 apparatus. The produced particles had a weight average diameter size of 2 $\mu$m (deviation coefficient 0.89), with a conversion of 98% (ethylmethacrylate residue 0.05%, methacrylic acid residue 0.05%). The obtained particulate copolymer dispersion showed no coagula or agglomerates.

Sample 2 (Invention). Same as Sample 1, except that 108 g of an acid processed gelatin having a isoelectric point (IEP) of 6.7 have been used instead of PVP™K90 to allow the mixture to have a viscosity of 38 cps at 40°C. The produced particles had a weight average diameter size of 2 $\mu$m (deviation coefficient 0.90), with a conversion of 98% (ethylmethacrylate residue 0.05%, methacrylic acid residue 0.04%). The obtained particulate copolymer dispersion showed no coagulant or agglomerates.

Sample 3 (Invention). Same as Sample 1, except that 88 g of an alkali processed gelatin (IEP 5.0) have been used instead of PVP™K90, to allow the mixture to have a viscosity of 42 cps at 40°C. The produced particles had a weight average diameter size of 2 $\mu$m (deviation coefficient 0.89), with a conversion of 98% (ethylmethacrylate residue 0.05%, methacrylic acid residue 0.04%). The obtained particulate copolymer dispersion showed no coagulant or agglomerates.

Sample 4 (Invention). Same of Sample 2, except that 15 g of dimethylaminoethylmethacrylate have been used instead of methacrylic acid (the weight ratio ethylmethacrylate: dimethylaminoethylmethacrylate was 56:44, the molar ratio was 64:36), to allow the mixture to have a viscosity of 38 cps at 40°C. The produced particles had a weight average diameter size of 3 $\mu$m (deviation coefficient 1.12), with a conversion of 99% (ethylmethacrylate residue 0.05%, dimethylaminoethylmethacrylate residue none). The obtained particulate copolymer dispersion showed no coagulant or agglomerates.

Sample 5 (Invention). Same of Sample 2, except that 15 g of hydroxyethylmethacrylate have been used instead of methacrylic acid (the weight ratio ethylmethacrylate: hydroxyethylmethacrylate was 56:44, the molar ratio was 60:40), to allow the mixture to have a viscosity of 38 cps at 40°C. The produced particles had a weight average diameter size of 3 $\mu$m (deviation coefficient 1.07), with a conversion of 97% (ethylmethacrylate residue 0.07%, hydroxyethylmethacrylate residue 0.06%). The obtained particulate copolymer dispersion showed no coagulant or agglomerates.

Sample 6 (Invention). Same of Sample 1, except that 89 g of an acid processed gelatin (IEP 6.7) have been used instead of PVP™K90, to allow the mixture to have a viscosity of 25 cps at 40°C. The produced particles had a weight average diameter size of 3.8 $\mu$m (deviation coefficient 1.03), with a conversion of 98% (ethylmethacrylate residue 0.05%, methacrylic acid residue 0.04%). The obtained particulate copolymer dispersion showed no coagulant or agglomerates.

Sample 7 (Invention). Same of Sample 1, except that 75 g of an acid processed gelatin (IEP 6.7) have been used instead of PVP™K90, to allow the mixture to have a viscosity of 15 cps at 40°C. The produced particles had a weight average diameter size of 4.7 $\mu$m (deviation coefficient 1.04), with a conversion of 98% (ethylmethacrylate residue 0.05%, methacrylic acid residue 0.05%). The obtained particulate copolymer dispersion showed no coagula or agglomerates.

Sample 8 (Comparative). Same of Sample 1, except that 10 g of PVP™K90 have been used to allow the mixture to have a viscosity of 7 cps at 40°C. No useful particulate copolymer was formed as all the copolymer agglomerated to a solid mass.

Sample 9 (Comparative). Same of Sample 1, except that 55 g of an acid processed gelatin (IEP 6.7) have been used instead of PVP™K90, to allow the mixture to have a viscosity of 7 cps at 40°C. No useful particulate copolymer was formed as all the copolymer agglomerated to a solid mass.

Results and experimental data are summarized in Table 1.

Table 1

| | Polymerization stabilizer | Insoluble monomer | Hydrophilic monomer | Viscosity at 40°C (cps) | Average diameter ($\mu$m) | Defects |
|---|---|---|---|---|---|---|
| Sample 1 (invention) | PVP™ K90 | ethyl-methacrylate | methacrylic acid | 38 | 2 | NO |

(continued)

|  | Polymerization stabilizer | Insoluble monomer | Hydrophilic monomer | Viscosity at 40°C (cps) | Average diameter (μm) | Defects |
|---|---|---|---|---|---|---|
| Sample 2 (invention) | acid-processed gelatin | ethyl-methacrylate | methacrylic acid | 38 | 2 | NO |
| Sample 3 (invention) | alkali-processed gelatin | ethyl-methacrylate | methacrylic acid | 42 | 2 | NO |
| Sample 4 (invention) | acid-processed gelatin | ethyl-methacrylate | dimethylamino ethylmethacrylate | 38 | 3 | NO |
| Sample 5 (invention) | acid-processed gelatin | ethyl-methacrylate | hydroxyethyl methacrylate | 38 | 3 | NO |
| Sample 6 (invention) | acid-processed gelatin | ethyl-methacrylate | methacrylic acid | 25 | 3.8 | NO |
| Sample 7 (invention) | acid-processed gelatin | ethyl-methacrylate | methacrylic acid | 15 | 4.7 | NO |
| Sample 8 (comparison) | PVP™ K90 | ethyl-methacrylate | methacrylic acid | 7 | solid | YES |
| Sample 9 (comparison) | acid-processed gelatin | ethyl-methacrylate | methacrylic acid | 7 | solid | YES |

Table 1 shows that the process for preparing invention Samples 1 to 3, having the same formulation but for different polymerization stabilizer, have all given good results (whichever polymerization stabilizer has been used), in terms of produced particles average diameter size and of absence of defects, such as coagula or agglomerates. Invention Samples 4 and 5, obtained by using different hydrophilic monomers in reaction media having the same viscosity of sample 2, presented good results, too. Invention Samples 6 and 7, obtained by reacting the same compounds of Sample 2 in reaction media having viscosity lower than the one measured for Sample 2 (but still higher than 10 cps when measured at 40°C), showed good results, too, in terms of produced particles average diameter size and absence of defects. On the contrary, the process for preparing comparative Samples 8 and 9, obtained by reacting the same compounds of, respectively Samples 1 and 2, in reaction media having viscosity lower than 10 cps when measured at 40°C, did not produce useful copolymer beads, because all the copolymer agglomerated to a solid mass.

Example 2.

Film 1 (comparison). A silver halide photographic film has been coated consisting of a cellulose triacetate support, a red-sensitive silver halide emulsion layer comprising a cyan-dye forming coupler, a green-sensitive silver halide emulsion layer comprising a magenta-dye forming coupler, a blue-sensitive silver halide emulsion layer comprising a yellow-dye forming coupler and an outer gelatin protective layer comprising as matting agents the particulate copolymer dispersion prepared by the two-step polymerization process described in European Patent application No. 370,405, said matting agents having a weight average diameter size of 2 μm and a deviation coefficient greater than 1.70 measured with a method based on laser diffraction using a Malvern MASTERSIZER™ X SB.20 apparatus.

Film 2 (invention) has been prepared as Film1, but the outer gelatin protective layer composition comprised as matting agent the particulate copolymer dispersion prepared according to the process of the present invention, said matting agents having a weight average diameter size of 2 μm and a deviation coefficient of 0.90 measured with a method based on laser diffraction using a Malvern MASTERSIZER™ X SB.20 apparatus.

The two films have been exposed to a white light source having a color temperature of 5,500° K. All exposed samples were developed with a standard C41 processing, as described in British Journal of Photography, Jul. 12, 1974, pages 597-598.

Invention film 2 showed better physical and optical properties. In particular, the invention film 2 showed better homogeneity, lower graininess, better resolving power, and improved brightness and slipperiness.

The RMS granularity of the two films has been measured according to the following method: the granularity of the blue layer in a neutral exposure has been determined by the RMS method (see The Theory of the Photographic Process, 4 th Edition, T. H. James, pp 625-628) using a 48 $\mu$m aperture at a density of from 0.1 to 0.9 units above the fog level (see table 2 for specific values). In a similar way, the granularity of the red layer has been determined using a 48 $\mu$m aperture at a density of from 0.06 to 1.0 units above the fog level (see table 3 for specific values). RMS granularity values are a measure of the standard deviation of granularity at various densities; lower RMS granularity values indicate improved photographic performance. Delta % RMS Blue and Red granularity values of neutral exposures were obtained by using the following formula :

$$\text{Delta \% RMS} = \frac{\text{RMS}_2 - \text{RMS}_1}{\text{RMS}_1} \times 100$$

wherein $\text{RMS}_1$ and $\text{RMS}_2$ are, respectively, the RMS granularity values of Film 1 and Film 2.

Negative values of delta % RMS Blue and red Granularity indicate improved photographic performance. A 6% change in RMS granularity offers a noticeable improvement in graininess as described by D.Zwick and D.Brothers (see J. Soc. Mot. Pict. Telev. Eng., V.86, pp. 427-430, 1977).

Table 2. Delta % RMS Blue granularity

| Density | Delta % Blue RMS |
|---------|------------------|
| 0.10 | -17.7 |
| 0.18 | -8.7 |
| 0.33 | -10.9 |
| 0.52 | -10.6 |
| 0.67 | 0.3 |
| 0.81 | 0 |
| 0.91 | 0 |

Table 3. Delta % RMS Red granularity

| Density | Delta % Red RMS |
|---------|-----------------|
| 0.06 | -12.9 |
| 0.15 | -10.0 |
| 0.30 | -11.4 |
| 0.51 | - 9.2 |
| 0.69 | - 8.5 |
| 0.86 | - 7.0 |
| 1.00 | - 8.7 |

Tables 2 and 3 clearly show that Film 2, containing as matting agent the particulate copolymer dispersion prepared according to the process of the present invention, showed better blue and red granularity performance, compared to comparison Film 1 containing particulate copolymer dispersion prepared according to a process different from that of the present invention.

Although specific examples of materials and conditions have been provided, they are intended to be exemplary. Where bullets or numbering have been used to differentiate materials or steps in a process, those editorial conveniences are not intended to specifically limit the list to an order in time or importance. For example, in a process with steps a), b) and c), the process steps may be practiced in any rational order and the sequence is limited only by reasoned consideration. For example, if a process recites a) dissolving A, b) dissolving B, c) mixing solutions of A and B, and d) reacting the solutions of A and B, steps a) and b) may be practiced in any order, step c) may be combined with step b), but step d) must be the last step practiced.

**Claims**

1. A process for synthesizing a particulate copolymer comprising: providing a reaction mixture comprising a reaction medium, a polymerization stabilizer, a water-insoluble ethylenically unsaturated monomer having a solubility in water lower than 10 g per 100 ml and an ethylenically unsaturated monomer containing hydrophilic functionality having a solubility in water higher than 10 g per 100 ml, and polymerizing the water-insoluble ethylenically unsaturated monomer and the ethylenically unsaturated monomer containing hydrophilic functionality, **characterized in that** said reaction mixture has a viscosity value of at least 10 cps measured at 40°C by a Brookfield viscometer.

2. A process for synthesizing a particulate copolymer as in claim 1, wherein said reaction medium comprises a mixture of water and at least one aliphatic alcohol having from 1 to 5 carbon atoms.

3. A process for synthesizing a particulate copolymer as in claim 1, wherein the polymerization stabilizer is selected from the group consisting of polyvinylpyridine, poly-N-vinylimidazole, polyethyleneimine polyvinylpyrrolidone, polyvinylalcohol, acid-processed gelatin and alkali-processed gelatin.

4. A process for synthesizing a particulate copolymer as in claim 1, wherein the water-insoluble ethylenically unsaturated monomer is selected from the group consisting of methylacrylate, methylmethacrylate, ethylacrylate, ethylmethacrylate, butylmethacrylate and butylacrylate.

5. A process for synthesizing a particulate copolymer comprising the steps of (a) dispersing a polymerization stabilizer in a reaction medium, (b) heating the reaction mixture to a temperature within the range of from 60° to 90°C, (c) adding to the reaction mixture a water-insoluble ethylenically unsaturated monomer having a solubility in water lower than 10 g per 100 ml and an ethylenically unsaturated monomer containing hydrophilic functionality having a solubility in water higher than 10 g per 100 ml, (d) adding to the reaction mixture a polymerization catalyst, and (e) maintaining the reaction mixture at reflux temperature until completion of polymerization, **characterized in that**, at the end of step (c), said reaction mixture has a viscosity value of at least 10 cps measured at 40 °C by a Brookfield viscometer.

6. A process for synthesizing a particulate copolymer as in claim 5, wherein the polymerization catalyst is selected from the group consisting of an azo initiator and a peroxide initiator.

7. A process for synthesizing a particulate copolymer as in claim 5, wherein the polymerization catalyst is selected from the group consisting of 2,2'-azobisisobutyronitrile, 2,2'-azobis(2,4-dimethylvaleronitrile), benzoyl peroxide and lauryl peroxide.

8. A particulate copolymer dispersion comprising a particulate copolymer of a water-insoluble ethylenically unsaturated monomer having a solubility in water lower than 10 g per 100 ml and an ethylenically unsaturated monomer containing hydrophilic functionality having a solubility in water higher than 10 g per 100 ml and a polymerization stabilizer dispersed in a mixture of water and at least one aliphatic alcohol having from 1 to 5 carbon atoms, said particulate copolymer dispersion being prepared by the process of claims 1 to 7, said particulate copolymer comprising an effective amount of an ethylenically unsaturated monomer containing hydrophilic functionality, and said particulate copolymer having a weight average diameter ranging from 0.5 to 8 $\mu$m and a deviation coefficient lower than 1.5.

9. A microparticle composition comprising the particulate copolymer of claim 8 and an auxiliary agent, wherein said auxiliary agent is encapsulated in said particulate copolymer and is selected from the group consisting of bioactive agents, dyes, pigments, and gases.

10. A photographic material comprising a support base having coated thereon at least one red-sensitive silver halide emulsion layer comprising a cyan-dye forming coupler, at least one green-sensitive silver halide emulsion layer comprising a magenta-dye forming coupler, at least one blue-sensitive silver halide emulsion layer comprising a yellow-dye forming coupler and an outer gelatin protective layer comprising the particulate copolymers of claim 8.

**Patentansprüche**

1. Verfahren zum Synthetisieren eines partikulären Copolymers, das Folgendes umfasst:

   Verfügbarmachen einer Reaktionsmischung, die ein Reaktionsmedium, einen Polymerisationsstabilisator, ein wasserunlösliches ethylenisch ungesättigtes Monomer mit einer Löslichkeit in Wasser von weniger als 10 g pro 100 ml und ein ethylenisch ungesättigtes Monomer, das eine hydrophile Funktionalität enthält, mit einer Löslichkeit in Wasser von mehr als 10 g pro 100 ml umfasst, und Polymerisieren des wasserunlöslichen ethylenisch ungesättigten Monomers und des ethylenisch ungesättigten Monomers, das eine hydrophile Funktionalität enthält, **dadurch gekennzeichnet, dass** die Reaktionsmischung einen Viskositätswert von mindestens 10 cps aufweist, gemessen bei 40°C durch ein Brookfield-Viskosimeter.

2. Verfahren zum Synthetisieren eines partikulären Copolymers nach Anspruch 1, wobei das Reaktionsmedium eine Mischung aus Wasser und mindestens einem aliphatischen Alkohol mit 1 bis 5 Kohlenstoffatomen umfasst.

3. Verfahren zum Synthetisieren eines partikulären Copolymers nach Anspruch 1, wobei der Polymerisationsstabilisator ausgewählt ist aus der Gruppe, bestehend aus Polyvinylpyridin, Poly-N-Vinylimidazol, Polyethylenimin, Polyvinylpyrrolidon, Polyvinylalkohol, unter sauren Bedingungen bearbeiteter Gelatine und unter alkalischen Bedingungen bearbeiteter Gelatine.

4. Verfahren zum Synthetisieren eines partikulären Copolymers nach Anspruch 1, wobei das wasserunlösliche ethylenisch ungesättigte Monomer ausgewählt ist aus der Gruppe, bestehend aus Methylacrylat, Methylmethacrylat, Ethylacrylat, Ethylmethacrylat, Butylmethacrylat und Butylacrylat.

5. Verfahren zum Synthetisieren eines partikulären Copolymers, welches die folgenden Schritte umfasst: (a) Dispergieren eines Polymerisationsstabilisators in einem Reaktionsmedium, (b) Erhitzen der Reaktionsmischung auf eine Temperatur im Bereich von 60°C bis 90°C, (c) Zugeben eines wasserunlöslichen ethylenisch ungesättigten Monomers mit einer Löslichkeit in Wasser von weniger als 10 g pro 100 ml und eines ethylenisch ungesättigten Monomers, das eine hydrophile Funktionalität enthält, mit einer Löslichkeit in Wasser von mehr als 10 g pro 100 ml zu der Reaktionsmischung, (d) Zugeben eines Polymerisationskatalysators zu der Reaktionsmischung, und (e) Halten der Reaktionsmischung bei Rückflusstemperatur bis zur Vervollständigung der Polymerisation, **dadurch gekennzeichnet, dass** am Ende von Schritt (c) die Reaktionsmischung einen Viskositätswert von mindestens 10 cps aufweist, gemessen bei 40°C durch ein Brookfield-Viskosimeter.

6. Verfahren zum Synthetisieren eines partikulären Copolymers nach Anspruch 5, wobei der Polymerisationskatalysator ausgewählt ist aus der Gruppe, bestehend aus einem Azoinitiator und einem Peroxidinitiator.

7. Verfahren zum Synthetisieren eines partikulären Copolymers nach Anspruch 5, wobei der Polymerisationskatalysator ausgewählt ist aus der Gruppe, bestehend aus 2,2'-Azobisisobutyronitril, 2,2'-Azobis(2,4-dimethylvaleronitril), Benzoylperoxid und Laurylperoxid.

8. Dispersion von partikulärem Copolymer, die ein partikuläres Copolymer eines wasserunlöslichen ethylenisch ungesättigten Monomers mit einer Löslichkeit in Wasser von weniger als 10 g pro 100 ml und eines ethylenisch ungesättigten Monomers, das eine hydrophile Funktionalität enthält, mit einer Löslichkeit in Wasser von mehr als 10 g pro 100 ml und einen Polymerisationsstabilisator, der in einer Mischung aus Wasser und mindestens einem aliphatischen Alkohol mit 1 bis 5 Kohlenstoffatomen dispergiert ist, umfasst, wobei die Dispersion von partikulärem Copolymer durch das Verfahren nach den Ansprüchen 1 bis 7 hergestellt wird, wobei das partikuläre Copolymer eine wirksame Menge eines ethylenisch ungesättigten Monomers, das eine hydrophile Funktionalität enthält, umfasst, und das partikuläre Copolymer einen gewichtsmittleren Durchmesser im Bereich vom 0,5 bis 8 $\mu$m und einen Abweichungskoeffizienten von weniger als 1,5 aufweist.

9. Mikropartikel-Zusammensetzung, die das partikuläre Copolymer nach Anspruch 8 und ein Hilfsmittel umfasst, wobei das Hilfsmittel in das partikuläre Copolymer eingekapselt ist und ausgewählt ist aus der Gruppe, bestehend aus bioaktiven Mitteln, Farbstoffen, Pigmenten und Gasen.

10. Fotografisches Material, das eine Stützgrundlage umfasst, die darauf beschichtet mindestens eine Schicht einer rotempfindlichen Silberhalogenidemulsion, die einen Cyanfarbstoff bildenden Kuppler umfasst, mindestens eine Schicht einer grünempfindlichen Silberhalogenidemulsion, die einen Magentafarbstoff bildenden Kuppler umfasst, mindestens eine Schicht einer blauempfindlichen Silberhalogenidemulsion, die einen Gelb-Farbstoff bildenden Kuppler umfasst, und eine außen liegende Gelatineschutzschicht, welche die partikulären Copolymere nach Anspruch 8 umfasst, aufweist.

**Revendications**

1. Un procédé pour synthétiser un copolymère particulaire comprenant :

   une fourniture d'un mélange de réaction comprenant un milieu de réaction, un stabilisant de polymérisation, un monomère à insaturation éthylénique insoluble dans l'eau ayant une solubilité dans l'eau inférieure à 10 g par 100 ml et un monomère à insaturation éthylénique contenant une fonctionnalité hydrophile ayant une solubilité dans l'eau supérieure à 10 g par 100 ml, et
   une polymérisation du monomère à insaturation éthylénique insoluble dans l'eau et du monomère à insaturation éthylénique contenant une fonctionnalité hydrophile,

   **caractérisé en ce que** le mélange de réaction a une valeur de viscosité d'au moins 10 cps mesurée à 40°C par un viscosimètre Brookfield.

2. Un procédé pour synthétiser un copolymère particulaire selon la revendication 1, dans lequel le milieu de réaction comprend un mélange d'eau et d'au moins un alcool aliphatique ayant de 1 à 5 atomes de carbone.

3. Un procédé pour synthétiser un copolymère particulaire selon la revendication 1, dans lequel le stabilisant de polymérisation est sélectionné dans le groupe consistant en du polyvinylpyridine, du poly-N-vinylimidazole, du polyvinylpyrrolidone de polyéthylèneimine, du polyvinylalcool, de la gélatine traitée à l'acide et de la gélatine traitée à l'alcalin.

4. Un procédé pour synthétiser un copolymère particulaire selon la revendication 1, dans lequel le monomère à insaturation éthylénique insoluble dans l'eau est sélectionné dans le groupe consistant en du méthylacrylate, du méthylméthacrylate, de l'éthylacrylate, de l'éthylméthacrylate, du butylméthacrylate et du butylacrylate.

5. Un procédé pour synthétiser un copolymère particulaire comprenant comme étapes (a) une dispersion d'un stabilisant de polymérisation dans un milieu de réaction, (b) un chauffage du mélange de réaction à une température dans l'intervalle de 60° à 90°C, (c) un ajout au mélange de réaction d'un monomère à insaturation éthylénique insoluble dans l'eau ayant une solubilité dans l'eau inférieure à 10 g par 100 ml et d'un monomère à insaturation éthylénique contenant une fonctionnalité hydrophile ayant une solubilité dans l'eau supérieure à 10 g par 100 ml, (d) un ajout au mélange de réaction d'un catalyseur de polymérisation , et (e) un maintient du mélange de réaction à une température de reflux jusqu'à achèvement de la polymérisation, **caractérisé en ce que**, à la fin de l'étape (c), le mélange de réaction a une valeur de viscosité d'au moins 10 cps mesurée à 40°C par un viscosimètre Brookfield.

6. Un procédé pour synthétiser un copolymère particulaire selon la revendication 5, dans lequel le catalyseur de polymérisation est sélectionné dans le groupe consistant en un initiateur azoïque et un initiateur de peroxyde.

7. Un procédé pour synthétiser un copolymère particulaire selon la revendication 5, dans lequel le catalyseur de polymérisation est sélectionné dans le groupe consistant en du 2,2'-azobisisobutyronitrile, du 2,2'-azobis(2,4-diméthylvaléronitrile), du peroxyde de benzoyle et du peroxyde de lauryl.

8. Une dispersion de copolymère particulaire comprenant un copolymère particulaire d'un monomère à insaturation éthylénique insoluble dans l'eau ayant une solubilité dans l'eau inférieure à 10 g par 100 ml et un monomère à insaturation éthylénique contenant une fonctionnalité hydrophile ayant une solubilité dans l'eau supérieure à 10 g par 100 ml et un stabilisant de polymérisation dispersé dans un mélange d'eau et au moins un alcool aliphatique ayant de 1 à 5 atomes de carbone, la dispersion de copolymère particulaire étant préparé par le procédé des revendications 1 à 7, le copolymère particulaire comprenant une quantité efficace de monomère à insaturation éthylénique contenant une fonctionnalité hydrophile, et le copolymère particulaire ayant un diamètre moyen au poids allant de 0,5 à 8 μm et un coefficient de déviation inférieur à 1,5.

9. Une composition de microparticules comprenant le copolymère particulaire de la revendication 8 et un agent auxiliaire, dans laquelle l'agent auxiliaire est encapsulé dans ledit copolymère particulaire et est sélectionné dans le groupe consistant en des agents bioactifs, des marqueurs, des pigments et des gaz.

10. Un matériau photographique comprenant une base de support ayant recouvert sur celle-ci au moins une couche d'émulsion d'halogénure d'argent sensible au rouge comprenant un coupleur formant un marqueur cyan, au moins une couche d'émulsion d'halogénure d'argent sensible au vert comprenant un coupleur formant un marqueur magenta, au moins une couche d'émulsion d'halogénure d'argent sensible au bleu comprenant un coupleur formant un marqueur jaune, et une couche extérieure protectrice de gélatine comprenant les copolymères particulaires de la revendication 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2391181 A
- US 2992101 A
- US 3767448 A
- US 4142894 A
- EP 370405 A
- EP 831366 A

- US 6455157 B
- US 6432715 B
- US 6413433 B
- US 6083404 A
- US 6054118 A

**Non-patent literature cited in the description**

- **K.ISHIZU et al.** *Makromol.Rapid Commun.,* 1997, vol. 18, 639
- **KUN CAO et al.** *Macromol. Symp.,* 2000, vol. 150, 195-200
- *British Journal of Photography,* 12 July 1974, 597-598

- **T. H. JAMES.** The Theory of the Photographic Process. 625-628
- **D.ZWICK ; D.BROTHERS.** *J. Soc. Mot. Pict. Telev. Eng.,* 1977, vol. 86, 427-430